# EUROPEAN PATENT SPECIFICATION

(11) **EP 3 072 388 B1**
(45) Date of publication and mention of the grant of the patent: **15.05.2019**
(21) Application number: 15160421.2
(22) Date of filing: 23.03.2015
(51) Int. Cl.: A01G 25/16

(54) **Irrigation controller**
Bewässerungssteuerung
Contrôleur d'irrigation

(43) Date of publication of application: 28.09.2016
(73) Proprietor: Yuan Mei Corp., Changhua County 50547 (TW)
(72) Inventor: Wang, King-Yuan, Changhua County 50547 (TW); Cheng, Chi-Han, Changhua County 50547 (TW)
(74) Representative: Lang, Christian

(56) References cited:
- WO-A2-2004/046872
- US-A1- 2010 230 510
- US-A1- 2014 229 024
- US-A1- 2015 053 288
- US-B2- 8 160 750
- US-S- D 713 271

## Description

### BACKGROUND OF THE INVENTION

### Fields of the invention

The present invention relates to an irrigation timer, and more particularly to an irrigation controller which is adapted to program the irrigation time, date, number of days, irrigation duration, and etc., and provides such scheduled irrigation information in an user interface for its users.

### Descriptions of Related Art

U.S. Patents US8160750 and D713271 teach a conventional programmable irrigation controller, having an user interface, for connecting to switchable valves of irrigation devices to control water flow. In order to control the delivery of water to various irrigation districts or zones, watering days with different definitions and their respective start times are generally provided for the user's irrigation devices of the conventional programmable irrigation controller. In addition, the date starting to watering and the schedule of each watering date as well as the watering mode program are defined and provided, wherein the user is able to select the proper program for the specific district or zone so as to provide watering with respect to each switchable watering valve. Therefore, the user may program and schedule watering according to the watering condition of specific watering district or zone so as to enable the irrigation controller to execute watering according to the programmed watering schedule automatically.

Referring to U.S. patent US8160750, a programmable irrigation controller is disclosed, which includes a housing, a microcontroller, a valve driver, and an user interface. The user interface consists of a rotary dial, a plurality of functionality labels marking a plurality of selectable positions of the rotary dial respectively, a LCD, first and second multifunction adjustment button groups, first and second system variable indicators, a group of irrigation frequency adjustment buttons, a plurality of irrigation frequency indicators, a plurality of irrigation frequency labels, a group of irrigation start day adjustment buttons, a plurality of irrigation start day indicators, a plurality of irrigation start day labels, a manual start button, a manual duration adjust indicator, and a language adjust button. As to the controller of the U.S. patent D713271, it includes a rotary dial, a semi-circular display, switches, and buttons, wherein the rotary dial is provided around an outer diameter of the semi-circular display.

According to the above conventional user interface, it is required to rotate the rotary dial to change the information mode. In other words, in order to change of the information model, the rotary dial must be operated by rotation to switch the selection to program irrigation related information. Per each switching of programmed mode, the rotary dial must be operated by another rotation thereof and then to operate the respective button and switch correspondingly. Such conventional operation interface requires the user to use his or her both hands to operate when he or she needs to operate rapidly.

Furthermore, the semicircular display would be covered by the hands operating the rotary dial of the user that prevents the user from fully observing the selection of the information mode of the semicircular display during switching and changing of the irrigation-related information on the semicircular display. Therefore, the user has no choice and is required to firstly rotate the rotary dial with his or her hand and then withdraw his or her hand from the rotary dial completely to operate the buttons or switches to program the irrigation-related information mode. This is a major drawback in operation of the conventional user interface of the irrigation controller. In addition, the LCD 206 display revealed in US8160750 is rectangular while the LCD display in D713271 is semicircular. Thus, the programing and selection of the information must be operated by rotating the rotary dial clockwise or counterclockwise or by pointing the indicator upward or downward. The rotary dial or the indicator is operated in two directions. In other words, the operation of the rotary dial for programming and selection of the information mode must be operated by rotation in two directions and, after the rotation operation, the programming and selection operation has to be completed by the further operation of the buttons or switches.

Document WO 2004/046872 A2 discloses an electronic irrigation controller which does not use any rotary dial for changing selection of the driving information modes. However, the user interface disclosed therein is complex and confusing for a user.

### SUMMARY OF THE INVENTION

Therefore it is an object of the present invention to provide an irrigation controller without using any rotary dial for changing selection of the driving information modes having a simple structure and being easy to operate, wherein a plurality of information modes is selected and switched by an operation of a single selective key that enables an one-hand operation of the changing of selection of the driving information modes by the user.

In order to achieve the above object, an irrigation controller of the present invention is provided, which includes a housing and an user interface disposed on the housing.

The housing, having a water inlet and a water outlet, comprises an information controller and a plurality of valves provided therein. The valves are provided in one end or two ends of the housing. The water inlet is provided at one side of the housing for connection to a water source, wherein an output end of the water inlet is connected to the respective valve. The water outlet is provided at one side of the housing, wherein an input end of the water outlet is connected to the corresponding valve.

The information controller has memory portions for storing and execution various information modes, including memory portions related to irrigation schedule information such as automatic irrigation, manual irrigation, clock set, start time, duration for watering, irrigation frequency, power saving, valve selection, and etc. According to a signal from the memory, the information controller outputs a signal to the valve for opening or closing the valve.

The user interface is disposed on an outer surface of the housing, used for presenting information to users, easily operated by buttons, and allowing users to learn and program irrigation related information directly. By the user interface, users can set a plurality of information zones including a first information zone, a second information zone, a third information zone, a fourth information zone, a fifth information zone, a six information zone, a seventh information zone, a eighth information zone, each of which has corresponding information related to irrigation.

The user interface is coupled to the information controller and used to provide signals to the information controller connected according to user's settings. Thus users can create an irrigation schedule.

The user interface consists of a round display (such as a dot-matrix LCD), an indicator and a plurality of program buttons. The round display is connected to an information controller and is used for presenting information related to irrigation parameters to users. Thus users can directly learn the programmed information or changes in the information shown on the round display after the information being programmed. The indicator is shown on the round display and pointing to various information zones including the first information zone, the second information zone, the third information zone, the fourth information zone, a fifth information zone, the sixth information zone, the seventh information zone, and the eighth information zone. The information zone is selected by operating a single select key while the indicator pointing to the information zone is moved in a single direction of a circular path.

The selective key is arranged at surface of one side of the user interface and used for switching the information zone.

There are at least two program buttons set on surface of one side of the user interface, arranged around the selective key, and used for programming the information zone.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a front view of an embodiment according to the present invention;
Fig. 2 is a perspective view of an embodiment in use according to the present invention;
Fig. 3 is a schematic drawing showing an user interface according to the present invention.

### DETAILED DESCRIPTION OF THE PREFERRED EMBODIMENT

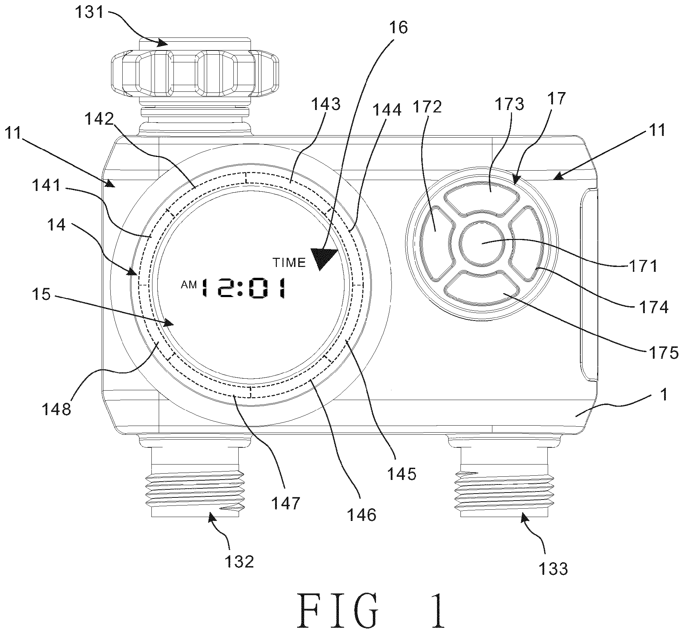

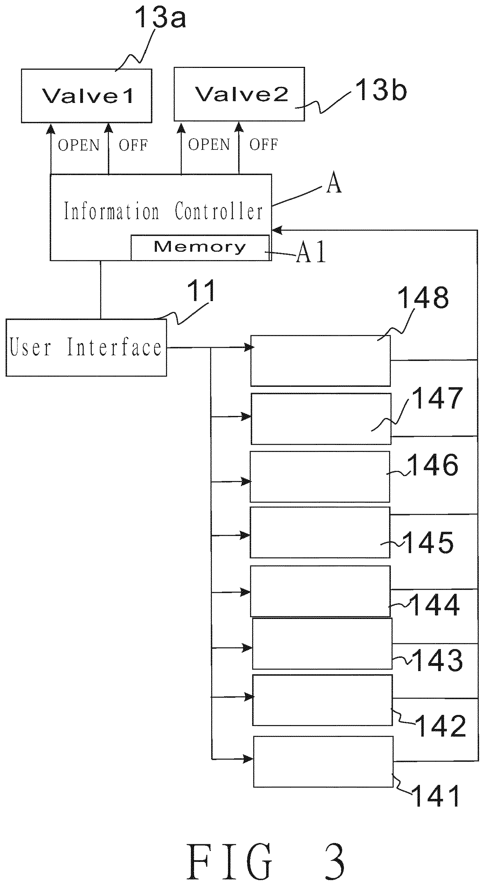

Refer to Fig. 1, Fig. 2 and Fig. 3, an irrigation controller includes a housing 1 and a user interface 11 disposed on an outer surface of the housing 1. The housing 1 includes an information controller A, valves 13a, 13b, a water inlet 131 and a plurality of water outlets 132, 133. The information controller A, and the valves 13a, 13b are mounted in the housing 1. The valves 13a, 13b are set in one end or two ends of the housing 1. The water inlet 131 at one side of the housing 1 is used for connection to a water source and an output end of the water inlet 131 is connected to the valves 13a, 13b. The water outlets 132, 133 are arranged at one side of the housing 1 and an input end of each water outlets 132/133 is connected to the corresponding valve 13a/13b. The information controller A includes a memory A1 that stores and executes a plurality of watering related information zones 14 including a first information zone 141, a second information zone 142, a third information zone 143, a fourth information zone 144, a fifth information zone 145, a sixth information zone 146, a seventh information zone 147, and an eighth information zone 148, each of which has corresponding information related to irrigation such as time or procedures. According to a signal from the memory A1, the information controller A outputs a signal to the valve 13a or the valve 13b for opening or closing the valve 13a/13b.

The user interface 11 displays the information zones 14 to users. The user interface 11 can be easily operated by buttons and users can learn and program the information zones 14 directly. The use interface 11 is used to program a plurality of information zones 14 including the first information zone 141, the second information zone 142, the third information zone 143, the fourth information zone 144, the fifth information zone 145, the sixth information zone 146, the seventh information zone 147, and the eighth information zone 148. The user interface 11 is coupled to the information controller A and used for providing signals to the coupled information controller A according to users'settings. Thus users can set up an irrigation schedule. The user interface 11 is connected to the information controller A for providing signals to the information controller A based on user's programming so as to create the irrigation schedule.

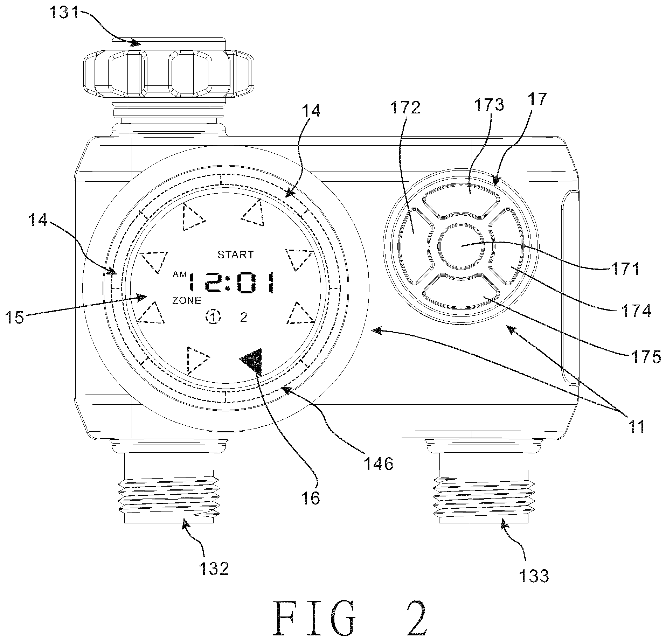

The user interface 11 consists of a round display 15 (such as a dot matrix liquid crystal display), an indicator 16 (such as an arrow) and a plurality of program buttons 17. The button is only an embodiment of the present invention. The button can also be other triggering element. The round display 15 is disposed on one side of the user interface 11 while the program buttons 17 are arranged at the other side of the user interface 11. The round display 15 is connected to the information controller A and is used for showing information related to irrigation parameters. Thus users can directly learn the programmed information or changes in information related to irrigation parameters shown on the round display 15 after the information related to irrigation parameters being programmed. The round display 15 also shows the indicator 16 pointing to programmable irrigation zones and the information zone selected. The indicator 16 is used to indicate a plurality information zones 14 including a first information zone 141, a second information zone 142, a third information zone 143, a fourth information zone 144, a fifth information zone 145, a sixth information zone 146, the seventh information zone 147, and the eighth information zone 148. The information zone is selected by operating a single select key 171. The indicator 16 pointing toward the information zone shown now is moved in a predetermined direction of a circular path, as shown in Fig. 2.

The information corresponding to the information zone 14 are shown circularly around the round display 15. Each information zone 146-148 has corresponding irrigation related information shown in words or figures. The indicator 16 pointing to the information zone selected is moved in a circular path.

The program buttons 17 include a select key 171 and a plurality of program keys 172, 173, 174, 175. The program buttons 17 is arranged at one side of the housing 1, opposite to the side disposed with the round display 15. In this embodiment, the plurality of program keys 172, 173, 174, 175 is arranged around the select key 171. The positions of the program buttons 17 are not limited. The position of the select key 171 can be changed to the position of the program key 172 or the program key 173.

The indicator 16 is moved by operating the select key 171. That means users can select one of the information zones 14 they intend to program by an operation of the select key 171. The indicator 16 is shifted to the next spot in a predetermined direction by clicking the select key 171 once. The indicator 16 is moved in a circular path.

In this embodiment, the information zones 14 include eight zones 141-148. The first information zone 141 is used to set up automatic irrigation. After the irrigation related information being programmed by the user, the programmed irrigation schedule is performed automatically if the user selects the first information zone 141.

The second information zone 142 is used to set up manual irrigation. After the second information zone 142 being manually activated, the user is allowed to manually operate the program key 175 for selecting opening of the valve 13a, opening of the valve13b, closing of the valve 13a or closing of the valve 13b for watering. Thus whether a specific zone is watered or not can be controlled.

The third information zone 143 is use to program the clock set at the moment. The clock can be adjusted according to users'requirements. When the "clock set"mode is selected, the time (hour and minute) now is shown on the round display 15. The user can adjust the hour and minute settings by the program buttons 172, 174.

The fourth information zone 144 is used for setting a start time to initiate watering and allowing users to operate the program key 175 and select opening of the valve 13a, opening of the valve13b, closing of the valve 13a or closing of the valve 13b for watering. The start time includes the number of hour(s) and the number of minute(s). For example, 12:01 represents confirmed start time to initiate watering. The number of hour(s) and the number of minute(s) are adjusted by the program keys 172, 174.

The fifth information zone 145 is used to program duration for watering. The duration means how long the watering continues. The duration can be set from 1 to 360 minutes. For example, 5 represents water is applied for 5 minutes.

The sixth information zone 146 is used to set irrigation frequency such as several days or hours. The irrigation frequency means how often the watering is performed. For example, 3 days represents that the irrigation is repeated each three days. 1 hour represents that watering is applied once each hour. The frequency is modified by the program keys 172, 174 to increase or decrease the daily or hourly interval.

The seventh information zone 147 is for power saving.

The eighth information zone 148 is used for selection of other valves.

The user learns the information directly on the round display 15 for programming the irrigation schedule. The user can select the information zone or switch among various information zones by operating a single select key 171 to move the indicator 16. Each time the select key 171 is clicked, the indicator 16 on the round display 15 is shifted to the next spot of a circular path in a predetermined direction so as to switch to another information zone 14. In the user interface 11 of the embodiment of Fig. 1, the indicator 16 pointing to the fourth information zone 144 is shown on the round display 15. In the user interface 11 of the embodiment of Fig. 2, the indicator 16 pointing to the sixth information zone 146 is shown on the round display 15.

In summary, the present invention features on that the indicator 16 is shifted to the next spot of a circular path in a predetermined direction. Thereby one of the plurality of information zones 14 arranged around the round display 15 including the first information zone 141, the second information zone 142, the third information zone 143, the fourth information zone 144, the fifth information zone 145, the sixth information zone 146, the seventh information zone 147, and the eighth information zone 148 can be selected. The selective key 17 is operated by a single hand and user's hand will not cover the round display 15. The selection and programming of the information zone is simple and rapid. Moreover, the housing 1 can be disposed with only the information controller A and the user interface 11. The valves 13a, 13b, the water inlet 131 and the water outlets 132, 133 are arranged at another housing. The housing with valves 13a, 13b is connected to the housing 1.

Although specific details and representative devices of particular embodiments are shown and described herein, additional advantages and modifications will readily occur to those skilled in the art. Accordingly, it will be understood that various modifications may be made without departing from the scope of the present invention defined by the appended claims.

## Claims

1. An irrigation controller with switchable valves (13a, 13b) connected to irrigation devices for control of water flow comprising:
a housing (1) having an information controller (A) with memory (A1);
wherein the memory (A1) is configured for storing and executing various information zones (14) including automatic irrigation (141), manual irrigation (142), clock set (143), start time (144), duration for watering (145), irrigation frequency (146), power saving (147), and valve selection (148);
a user interface (11) comprising triggering elements (17) and a display (15) disposed on an outer surface of the housing (1); wherein the user interface (11) having
a selective key (171) set on a surface of one side of the user interface (11) and configured for switching the information zone (14);
at least two program keys (172, 173, 174, 175) disposed on a surface of one side of the user interface (11), located next to the selective key (171) and operable to program the information zones (14);
a round display (15) disposed on one side of the user interface (11);
wherein the round display (15) is connected to the information controller (A) and configured for presenting the information of the information zones (14) to users for allowing the users to directly learn changes in the information zone (14) after the information zone (14) being programmed,
an indicator (16) displayed on the round display (15), pointing to the information zone (14) selected and being operable to move in a circular path on the round display (15) by operating the selective key (171); wherein the indicator (16) is configured to move to the adjacent information zone (14) by clicking the selective key (171) once;
wherein the user interface (11) is operable by a user to create an irrigation schedule, and
wherein the user interface (11) is coupled to the information controller (A), so that the user interface (11) can transmit the signals according to user's programming to the information controller (A);
**characterized in that** the at least two program keys (172, 173, 174, 175) are located around the selective key (171);
wherein the information zones (14) are labeled circular around the outer periphery of the round display (15),
wherein the indicator (16) can be displayed on an inner periphery of the round display (15) at positions adjacent to a corresponding information zone (14), and
wherein the information related to irrigation parameters is simultaneously displayed in a central part of the round display (15),
wherein said central part being enclosed by the inner periphery for displaying the indicators (16).

2. The irrigation controller according to claim 1, wherein
the housing (1) comprises at least two valves (13a, 13b) mounted therein; wherein the valves (13a, 13b) are disposed on one end or two ends of the housing (1); wherein the information controller (A) is coupled with the valves (13a, 13b), so that the output signal of the information controller (A) based on a signal from the memory (A1) can be transmitted to the valves (13a, 13b) to control opening or closing of the valves (13a, 13b); and
wherein the round display (15) is disposed opposite to the side of the user interface (11) with the selective key (171).

3. The irrigation controller according to claim 1, wherein the round display (15) of the user interface (11) is replaced by an oval display.

4. The irrigation controller according to claim 2, wherein the round display (15) of the user interface (11) is replaced by an oval display.

## Patentansprüche

1. Bewässerungssteuerung mit schaltbaren Ventilen (13a, 13b), die mit Bewässerungsvorrichtungen zur Kontrolle eines Wasserflusses verbunden sind, umfassend:
ein Gehäuse (1), das eine Informationssteuereinheit (A) mit einem Speicher (A1) aufweist, wobei der Speicher (A1) konfiguriert ist, um verschiedene Informationszonen (14), welche eine automatische Bewässerung (141), manuelle Bewässerung (142), Uhreinstellung (143), Startzeit (144), Dauer der Bewässerung (145), Bewässerungshäufigkeit (146), Energieeinsparung (147) und Ventilauswahl (148) beinhalten, zu speichern und auszuführen,
eine Benutzerschnittstelle (11), welche Betätigungselemente (17) und eine Anzeige (15) umfasst, die an einer Außenfläche des Gehäuses (1) angeordnet ist,
wobei die Benutzerschnittstelle (11) aufweist:
eine Auswahltaste (171), die an einer Oberfläche von einer Seite der Benutzerschnittstelle (11) angeordnet ist und zum Umschalten der Informationszone (14) konfiguriert ist,
wenigstens zwei Programmiertasten (172, 173, 174, 175), die an einer Oberfläche von einer Seite der Benutzerschnittstelle (11) angeordnet sind, sich neben der Auswahltaste (171) befinden und betätigbar sind, um die Informationszonen (14) zu programmieren,
eine runde Anzeige (15), die an einer Seite der Benutzerschnittstelle (11) angeordnet ist, wobei die runde Anzeige (15) mit der Informationssteuereinheit (A) verbunden ist und zur Darstellung der Information der Informationszonen (14) für die Benutzer konfiguriert ist, um es den Benutzern zu ermöglichen, nach der Programmierung der Informationszone (14) Änderungen in der Informationszone (14) direkt zu erfahren,
einen Indikator (16), der an der runden Anzeige (15) angezeigt wird, auf die ausgewählte Informationszone (14) zeigt und so betätigbar ist, dass er sich durch Bedienen der Auswahltaste (171) auf einer Kreisbahn an der runden Anzeige (15) bewegt, wobei der Indikator (16) so konfiguriert ist, dass er sich durch einmaliges Drücken der Auswahltaste (171) zu der benachbarten Informationszone (14) bewegt,
wobei die Benutzerschnittstelle (11) durch einen Benutzer betätigbar ist, um einen Bewässerungsplan zu erstellen, und
wobei die Benutzerschnittstelle (11) mit der Informationssteuereinheit (A) gekoppelt ist, sodass die Benutzerschnittstelle (11) die der Programmierung des Benutzers entsprechenden Signale an die Informationssteuereinheit (A) übertragen kann,
**dadurch gekennzeichnet, dass** die wenigstens zwei Programmiertasten (172, 173, 174, 175) um die Auswahltaste (171) herum angeordnet sind,
wobei die Informationszonen (14) kreisförmig um den äußeren Umfang der runden Anzeige (15) herum gekennzeichnet sind,
wobei der Indikator (16) an einem inneren Umfang der runden Anzeige (15) an Positionen angezeigt werden kann, die zu einer korrespondierenden Informationszone (14) benachbart sind, und
wobei die die Bewässerungsparameter betreffende Information gleichzeitig in einem zentralen Teil der runden Anzeige (15) angezeigt wird, wobei der zentrale Teil durch den zur Anzeige der Indikatoren (16) dienenden inneren Umfang umgeben ist.

2. Bewässerungssteuerung nach Anspruch 1, bei welcher
das Gehäuse (1) wenigstens zwei darin montierte Ventile (13a, 13b) umfasst, wobei die Ventile (13a, 13b) an einem Ende oder an zwei Enden des Gehäuses (1) angeordnet sind, wobei die Informationssteuereinheit (A) mit den Ventilen (13a, 13b) in Verbindung steht, sodass das auf einem Signal von dem Speicher (A1) basierende Ausgangssignal der Informationssteuereinheit (A) an die Ventile (13a, 13b) übermittelt werden kann, um ein Öffnen oder Schließen der Ventile (13a, 13b) zu steuern, und
wobei die runde Anzeige (15) gegenüber der Seite der Benutzerschnittstelle (11) mit der Auswahltaste (171) angeordnet ist.

3. Bewässerungssteuerung nach Anspruch 1, bei welcher die runde Anzeige (15) der Benutzerschnittstelle (11) durch eine ovale Anzeige ersetzt ist.

4. Bewässerungssteuerung nach Anspruch 2, bei welcher die runde Anzeige (15) der Benutzerschnittstelle (11) durch eine ovale Anzeige ersetzt ist.

## Revendications

1. Dispositif de régulation d'irrigation doté de robinets permutables (13a, 13b) raccordé à des dispositifs d'irrigation pour réguler un écoulement d'eau comprenant:
un boîtier (1) ayant un dispositif de régulation d'informations (A) doté d'une mémoire (A1);
dans lequel la mémoire (A1) est configurée pour stocker et exécuter diverses zones d'informations (14) incluant une irrigation automatique (141), une irrigation manuelle (142), un réglage de l'heure (143), un temps de démarrage (144), une durée d'arrosage (145), une fréquence d'irrigation (146), une économie d'énergie (147), et une sélection de robinet (148);
une interface utilisateur (11) comprenant des éléments de déclenchement (17) et un afficheur (15) disposé sur une surface externe du boîtier (1); dans lequel l'interface utilisateur (11) comporte
une touche sélective (171) installée sur une surface d'un côté de l'interface utilisateur (11) et configurée pour permuter la zone d'informations (14);
au moins deux touches de programme (172, 173, 174, 175) disposées sur une surface d'un côté de l'interface utilisateur (11), situées près de la touche sélective (171) et opérationnelles pour programmer les zones d'informations (14);
un afficheur rond (15) disposé sur un côté de l'interface utilisateur (11);
dans lequel l'afficheur rond (15) est connecté au dispositif de régulation d'informations (A) et configuré pour présenter des informations des zones d'informations (14) à des utilisateurs pour permettre aux utilisateurs d'apprendre directement des changements dans la zone d'informations (14) après que la zone d'informations (14) est programmée,
un indicateur (16) affiché sur l'afficheur rond (15), indiquant la zone d'informations (14) sélectionnée et opérationnel pour se déplacer en un trajet circulaire sur l'afficheur rond (15) en actionnant la touche sélective (171); dans lequel l'indicateur (16) est configuré pour se déplacer jusqu'à la zone d'informations (14) adjacente en cliquant sur la touche sélective (171) une fois;
dans lequel l'interface utilisateur (11) est opérationnelle par un utilisateur pour créer un programme d'irrigation, et
dans lequel l'interface utilisateur (11) est couplée au dispositif de régulation d'informations (A), de sorte que l'interface utilisateur (11) puisse transmettre les signaux selon la programmation de l'utilisateur au dispositif de régulation d'informations (A);
**caractérisé en ce que** les au moins deux touches de programme (172, 173, 174, 175) sont situées autour de la touche sélective (171);
dans lequel les zones d'informations (14) sont étiquetées de façon circulaire autour de la périphérie externe de l'afficheur rond (15),
dans lequel l'indicateur (16) peut être affiché sur une périphérie interne de l'afficheur rond (15) à des positions adjacentes à une zone d'informations (14) correspondante, et
dans lequel les informations liées à des paramètres d'irrigation sont affichées simultanément dans une partie centrale de l'afficheur rond (15),
dans lequel ladite partie centrale est entourée par la périphérie interne pour afficher des indicateurs (16).

2. Dispositif de régulation d'irrigation selon la revendication 1, dans lequel
le boîtier (1) comprend au moins deux robinets (13a, 13b) montés à l'intérieur ; dans lequel les robinets (13a, 13b) sont disposés sur une extrémité ou deux extrémités du boîtier (1); dans lequel le dispositif de régulation d'informations (A) est couplé aux robinets (13a, 13b), de sorte que le signal de sortie du dispositif de régulation d'informations (A) d'après un signal provenant de la mémoire (A1) puisse être transmis aux robinets (13a, 13b) pour réguler l'ouverture ou la fermeture des robinets (13a, 13b); et
dans lequel l'afficheur rond (15) est disposé opposé au côté de l'interface utilisateur (11) avec la touche sélective (171).

3. Dispositif de régulation d'irrigation selon la revendication 1, dans lequel l'afficheur rond (15) de l'interface utilisateur (11) est remplacé par un afficheur ovale.

4. Dispositif de régulation d'irrigation selon la revendication 2, dans lequel l'afficheur rond (15) de l'interface utilisateur (11) est remplacé par un afficheur ovale.
